# EUROPEAN PATENT APPLICATION

(11) **EP 1 531 467 A2**
(43) Date of publication of application: **18.05.2005**
(21) Application number: 04025915.2
(22) Date of filing: 02.11.2004
(51) Int. Cl.: G11B 15/68, G11B 17/22, G11B 25/04, G11B 33/12

(54) **Configurable storage system with swappable tape magazines and hard-disk magazines**

(30) Priority: 31.10.2003 US 516544 P
(71) Applicant: Tandberg Data ASA, 0884 Oslo (NO)
(72) Inventor: Hoelsaeter, Havard, 0861 Oslo (NO)
(74) Representative: Tönhardt, Marion, Dr.

(57) **Abstract**

A data storage system for connection to a computer or computer network includes a housing enclosing a tape drive and one or more cartridge storage magazines for storing a plurality of data cartridges for use by the tape drive. A cartridge shuttle in the housing transfers the data cartridges between the tape drive and the storage magazine. A hard drive magazine of a configuration and size of the cartridge storage magazine is provided, the hard drive magazine having a plurality of hard drives for data storage. The hard drive magazine is insertable into the housing in a same location as the cartridge storage magazines. Insertion of the hard drive magazine into the device provides data and power connection to the hard drives so that the hard drives may be used for data storage in addition to or in place of the data storage on the data cartridges.

## Description

### CROSS REFERENCE TO RELATED APPLICATION

This application claims the benefit of U.S. Provisional Patent Application Serial No. 60/516,544 filed October 31, 2003, which is incorporated herein by reference.

### BACKGROUND OF THE INVENTION

### Field of the Invention

The present invention relates generally to a data storage and backup system for a computer or computer network, and more particularly to a data back up system using tape and hard disk storage media.

### Description of the Related Art

Computer systems and networks are subject to occasional failure and so safety of the data requires storage of the data using backup systems. The backup system receives a copy of data stored on the computer or computer network where it is stored in the event of either partial or complete failure of the computer system. The data may be retrieved from the backup system to recover from operator error as well. Backup systems are most effective when they are used to backup the data regularly, preferably without requiring human intervention. Automated data backup systems perform the backups on a schedule as needed.

The data may be backed up, or stored, to various media. The most frequently used media is tape media for data backup, due to its high capacity. Tape media is slow, however, and may require that the back up be performed during extended down times for the computer system, such as at night. Faster backup media, such as disk media, speed up the data storage process so that the backup may be performed during the work day, for example. Of course, the hard disk may be chosen for other reasons as well.

Data storage systems are getting more and more focused on targeting the real needs of the user. In that respect a conventional split between "slow" but inexpensive tape backup, or "fast" and expensive disk systems has to be dealt with by the user. In most cases the user really needs both system types, which leads to higher costs for multiple systems.

### SUMMARY OF THE INVENTION

The present invention provides a data storage and backup system which combines tape backup and hard drive backup and storage into one unit. The present system can be customized according to changing needs of a user.

The present system includes an automated tape back up system having a housing in which is a tape recording and reading drive is provided, along with tape cartridge storage locations for holding a plurality of tape cartridges and a tape shuttle for moving the tape cartridges from the holding locations to the tape drive and back to the holding locations. The tape storage locations are preferably in the form of one or more magazines which hold a number of tape cartridges. The magazines are removable for quick exchange of multiple cartridges. The present system also includes one or more magazines of hard disk drives. The magazines of hard disk drives are mountable in the same locations as the tape cartridge magazines and so may be inserted in place of a tape cartridge magazine. The back up system may use either the tape or the hard disks for the backup process, as desired by the user.

### BRIEF DESCRIPTION OF THE DRAWINGS

**Figure 1** is a perspective view generally from the top front of a data storage and backup unit according to the principles of the present invention;
**Figure 2** is a perspective view generally from the top rear of the data storage and backup unit of Figure 1;
**Figure 3** is a perspective view generally from the top front of the present data storage and backup unit configured for use of the hard disk docking connector;
**Figure 4** is a perspective view generally from the to front of the data storage and backup unit configured for use of the hard disk cable connector;
**Figure 5** is a perspective view of a hard disk magazine with four hard disks;
**Figure 6** is a perspective view of the hard disk magazine shown without the housing;
**Figure 7** is a perspective view of the hard disk magazine shown ready for hard disk insertion; and
**Figure 8** is a perspective view of a hard disk unit for mounting in the hard disk magazine.

### DETAILED DESCRIPTION OF THE PREFERRED EMBODIMENTS

In a preferred embodiment of the present invention, a tape drive loader and storage library device is able to receive magazines of hard disks instead of or in addition to magazines of tape cartridges. The cartridge moving robotics, or tape shuttle, in the loader device operates to provide cartridge loading and unloading in the tape drive and cartridge storage magazines, as is known. The cartridge storage magazines, which each hold a plurality of tape cartridges, are removable from and replaceable into the loader and library device. According to the invention, a magazine of hard disks is loaded in to the same physical magazine slot in the loader and library device as for the tape cartridge magazines. The hard disk magazine holds one or more hard disk units connected to an interface at the back end of the magazine housing. The connection between the hard disk magazine and the loader is either by a swap connection when the magazine is fully loaded into the loader, or by a manual cable connection before the magazine is put into the loader. The loader recognizes on its own if a hard disk magazine is loaded by checking the connection terminal.

In some embodiments, two or more tape drives may be provided in the present system.

The data path for transfer of the data between the computer system and the present data backup system is from and to an external host to the internal loader PCB (Printed Circuit Board) SCSI (Small Computer System Interface) controller to the tape drive(s) and/or hard disk(s).

With the present apparatus, it is possible to bulk load hard disks into a tape based storage system, and thereby customize the total system. The present apparatus make the following possible.

The storage system is fully up-gradable and configurable. A user may choose hard-disk performance and/or tape performance in the same physical unit.

The present system provides a next to zero backup window. All data which shall be backed up externally is first cached down to a hard disk portion of the loader, and the backup on the tape is done from the hard disk portion without the user noticing the backup being performed. Alternatively, the system may run the backup directly to tape, or may backup to hard disk and leave the data on the hard disk(s).

The hard-disk magazines and tape magazines are bulk loaded. Both magazine types are removable from the system so that they may be put in a safe place.

Hard-disk magazine units are individually hot swappable, and the individual hard disks within each hard disk magazine are also hot swappable, in a preferred embodiment.

The hard disk portions in one example include operating system software and storage of most recently used data, etc.

The present hard disk system of one embodiment runs as a RAID (Redundant Array of Inexpensive Disks) system. The tape portion mirrors the hard disk system in one embodiment.

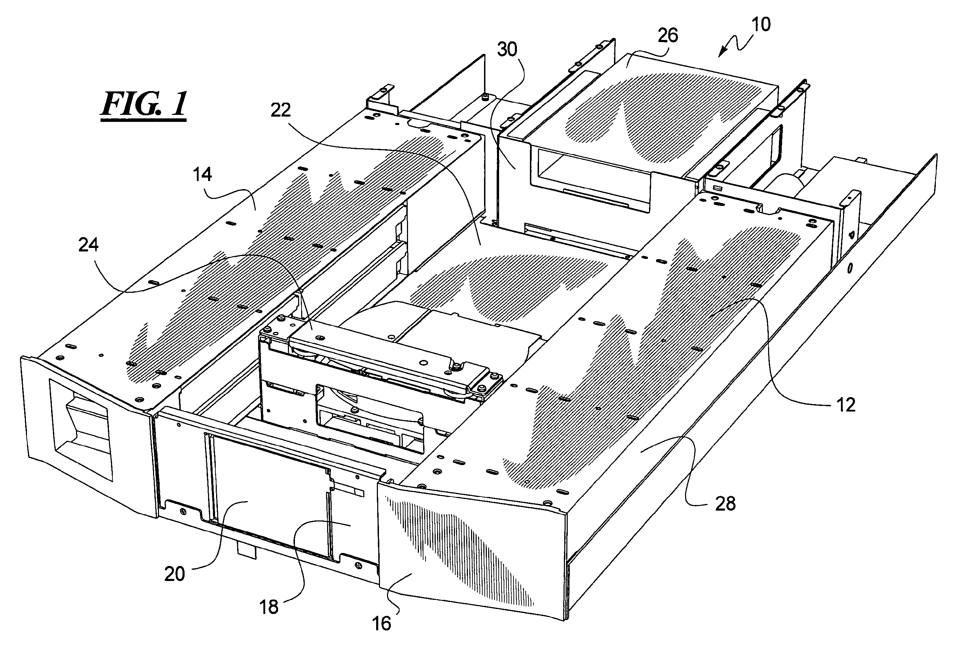

Referring first to **Figure 1**, a loader apparatus 10 is provided with a tape cartridge magazine 12 and a hard disk magazine 14. The loader apparatus 10 is of a size and shape to comply with a form factor to fit in a standard rack for electronic devices, such as computer devices, and in particular network computer devices. For example, the device of one embodiment has a 2U form factor. The loader 10 has a front panel 16 with a display 18 and may have an access door 20 for insertion and removal of tape cartridges one at a time.

Within the apparatus 10 is a central passageway 22 along which moves cartridge shuttle device 24 which retrieves, transports and loads tape cartridges between the tape cartridge magazine(s) 12 and a tape drive 26. The tape drive 26 writes data to the tape of a tape cartridge that has been inserted therein by the cartridge shuttle 24 and reads the data from the tape as required. The central passageway 22 is flanked by two magazines, which may be two tape cartridge magazines 12, one tape magazine 12 and one hard disk magazine 14, or two hard disk magazines 14. Each of the magazines 12 or 14 has a plurality of slots 28. For example, the tape magazine 12, in one embodiment, is four slots wide and two or three slots high. The cartridge shuttle 24 moves to respective slots 28, removes tape cartridges from the slots 28 and inserts the tape cartridges into the slots 28.

The tape drive 26 is disposed at an end 30 of the central passageway 22 into which the cartridge shuttle 24 loads the tape cartridges and from which the cartridge shuttle 24 receives the tape cartridges for transport back to the storage slots 28 of the magazine 12. The cartridge shuttle 24 includes robotics to position the cartridges for placement in the tape drive 26 and slots 28 and for removing the cartridges from the tape drive 26 and slots 28, including mechanisms for translational (i.e. horizontal) movement of the cartridges and elevational (i.e. vertical) movement of the cartridges.

The apparatus of Figure 1 is, in a preferred embodiment, enclosed within a housing (not shown). The apparatus may also be part of a larger component.

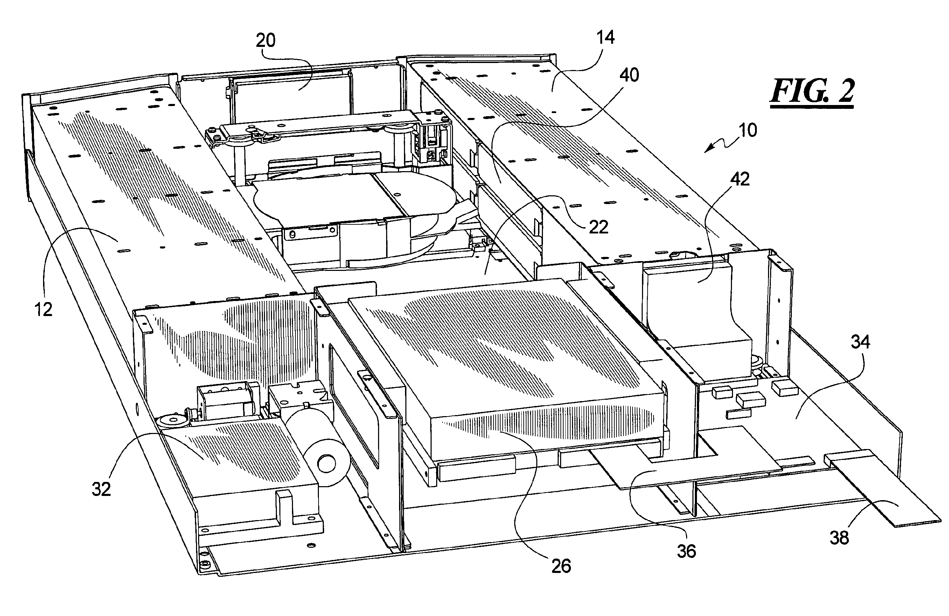

In **Figure 2**, the loader apparatus 10 is shown from a back view, including a view of the back of the tape drive 26 at the end of the passageway 22. The other end of the passageway 22 is at the inside of the access door 20. Adjacent the tape drive 26 on one side is a power supply 32 connected to supply power to the components of the present loader 10. On the other side of the tape drive 26 is a circuit board, such as a printed circuit board, 34 on which is provided the control circuitry for operation of the present apparatus. The tape drive 26 is connected to the circuit board 34 by a tape drive cable 36. A host connector cable 38 is provided connected to the circuit board 34 and connected to a host computer system or network from which the backup data is taken.

In the illustrated configuration, the magazine 12 is a tape cartridge magazine and provides physical storage space for the tape cartridges. No power or data connections to the magazine 12 are required. On the other hand, the hard disk magazine 14 include a number of hard disk drives 40. Power is supplied to the hard disk drives 40 from the power supply 32 and data is supplied to the hard drives 40 in situ. This is accomplished by a docking connection 42 that connects the circuit board 34 to the disk magazine 14. The docking connection is preferably a multi-pin plug connector, although other types of connectors may also be used.

The docking connection 42 permits the disk magazine 14 to be removed from the apparatus 10 and a different disk magazine inserted in its place merely by positioning the magazine 14 in the corresponding space in the apparatus 10 and disconnecting and respectively connecting the docking connection 42. The docking connection 42 is shown connected to only one magazine 14 in the illustration. The present apparatus 10 is preferably provided with a docking connection 42 at each magazine space so that a hard drive magazine can be connected in the apparatus 10 at any magazine space or at all of the magazine spaces, as desired by the user.

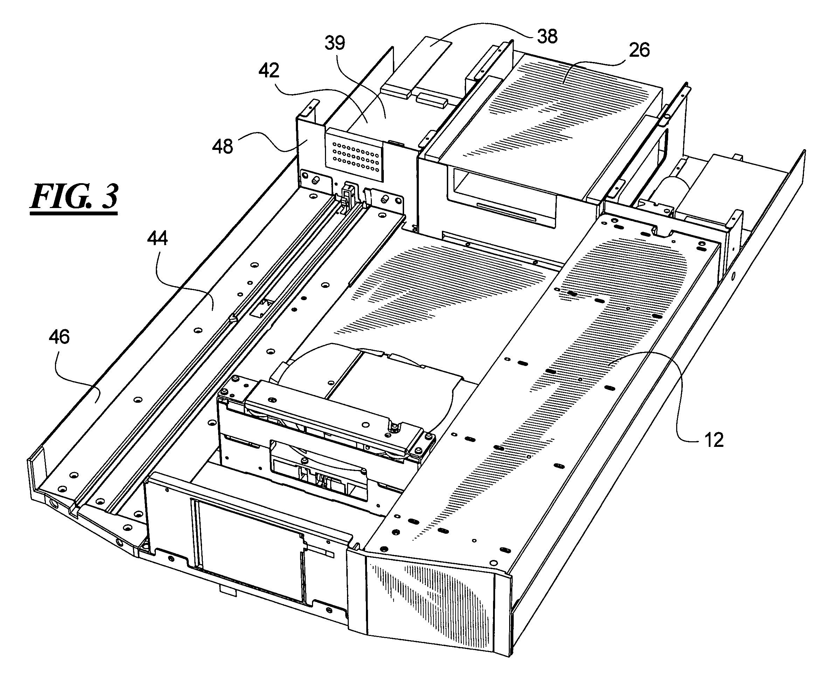

**Figure 3** shows the present loader apparatus with the hard disk magazine removed to reveal a docking bay 44 for the hard disk magazine. The docking bay 44 is of a size and shape to accept the hard disk magazine 14 or the tape cartridge magazine 12, as needed by the user. The docking bay 44 has a portion of the docking connector 42 at an end wall 48 of the docking bay by which the hard disks 40 in the hard disk magazine 14 are connected for power and data communications. The docking connector 42 is fixed in position and is configured so that it does not interfere with the mounting of the tape cartridge magazine 12 in the docking bay 44. Connection of the hard disk magazine 14 is accomplished by fastening a corresponding connector portion to the docking connector 42 while the hard disk magazine if in the docking bay 44.

The docking bay 44 of the illustrated embodiment includes a fastening apparatus to secure the disk magazine 14 in place. For example, a hingedly movable edge strip 46 may be moved into a securing position to hold the disk magazine 14 in the docking bay 44 and is moved to a release position to permit removal of the disk magazine 14. Other securing means may, of course, be used instead.

The loader apparatus as shown in Figure 3 requires opening of the housing to remove the hard disk magazine, which for safety reasons requires shutting down the power to the device. Thus, hot swapping of individual hard disks 40 in the hard disk magazine 14 or of the entire hard disk magazine 14 is not possible.

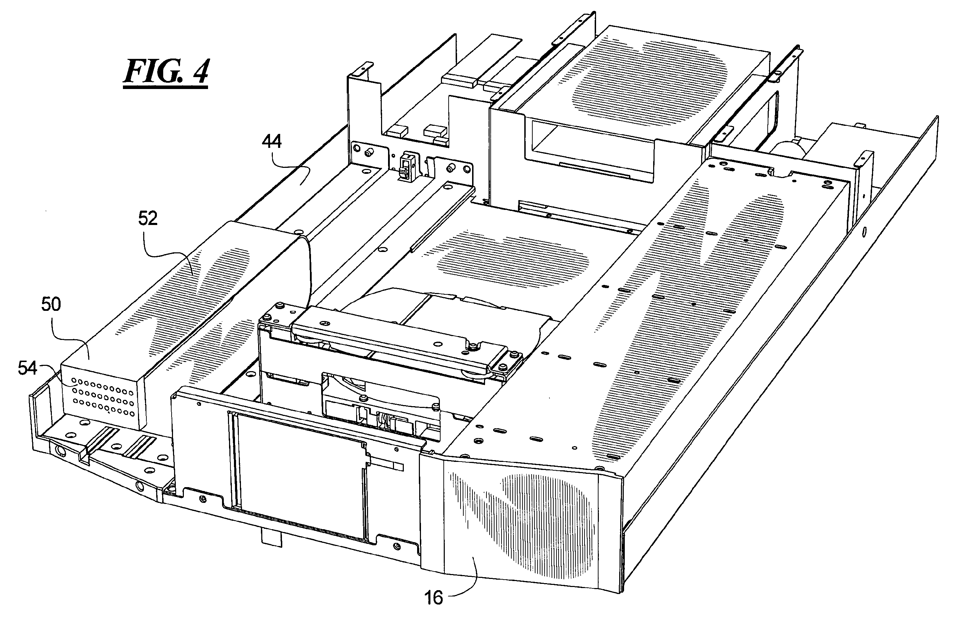

In **Figure 4**, an embodiment is shown which permits the hard disks to be removed and inserted while the loader apparatus is in a power-on condition, i.e. hot swapping. In particular, the docking bay 44 has a connector portion 50, also termed a docking connector, that connects the hard drive magazine 14 to the data interface and power electronics. The connector portion 50 is mounted so as to be movable along the length of the docking bay 44, preferably by a sliding movement which keeps the connector portion 50 in a connected position. A ribbon cable 52 provides the electrical connection between the connector portion 50 and the control and power electronics. The ribbon cable 52 is free at least at its end connected to the connector portion 50 so as to permit the connector portion 50 to moved from one end of the docking bay 44 to the other. In Figure 4, the cable 52 is rolled at its end connected to the control and power electronics while the connector portion 50 is at its forward position at the front of the present loader apparatus.

Hot swapping of the hard disks is accomplished by opening of a door 54 in the front panel 16 to access the front end of the docking bay 44. Alternatively, the door 54 in the front panel 54 is an end of the hard drive magazine 14 that closes the opening in the front panel 16 when the hard drive magazine 14 is fully inserted in the docking bay and that is releasable for removable of the hard disk magazine. The hard disk magazine 14 in the docking bay 44 is drawn out of the docking bay 44 through the opening so that it extends beyond the front panel 54 yet remains connected to the connector portion 50. The hard disk magazine 14 moves in the loading apparatus similar to a drawer.

The hard disk magazine 14 extends out from the loading apparatus far enough to permit the hard disks held in the magazine 14 to be accessed. Hard disk drives the magazine 14 may be removed from the slots and others placed in the slots while the present device is in operation. The magazine 14 is pushed into the docking bay 44 and the door closed, all while the device is operating. It is thus possible to add further hard disk storage capacity to the present device without shutting down.

It may also be possible to hot swap the entire hard disk magazine 14 from the device, since the connector portion 50 is at the front opening of the device when the hard disk magazine 14 has been slid to the position at which it extends from the device. In this case, it may be necessary to secure the connector portion 50 in the front position to permit a connection to the connector portion 50 when another hard disk magazine 14 is connected thereto.

Either bay, or both bays 12 and 14, of the device may have the connector portions 50 which permit the magazines to remain connected while being slid out to a position for hot swapping of drives.

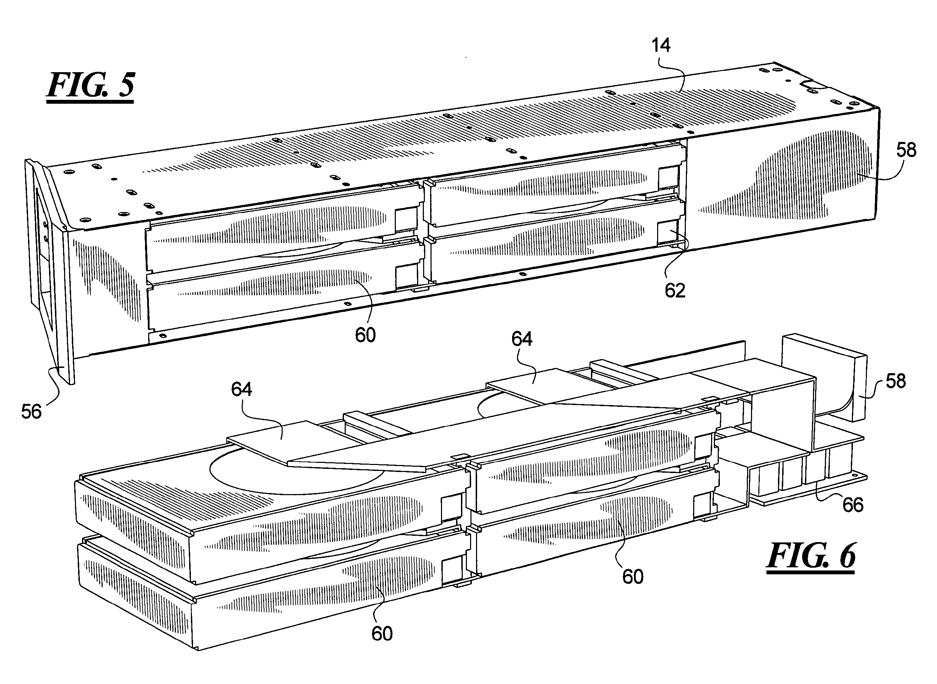

In **Figure 5**, the hard disk magazine 14 has been removed from the apparatus. The hard drive magazine 14 is of a shape and size to fill the docking bay in the loader apparatus 10. A front panel portion 56 of the hard disk magazine 14 serves as the cover for the portion of the front panel 16 of the loading apparatus 10 at the docking bay 44 when the hard disk magazine 14 is in place in the docking bay 44. An opposite end 58 of the hard disk magazine 14 has a connector for connection to the connector 42 or 50 of the loading apparatus.

The magazine 14 holds four hard disk drives 60, mounted in a two-by-two arrangement. The hard disk drives 60 are mounted in four slots 62 in the magazine 14 which each have the pins and plugs by which the hard disks are electrically connected. Insertion of the hard disks 60 into the slots 62 results in power and data connections being made to the hard disk drive 60, while removal of the hard disk drive 60 from the slot 62 disconnects the hard disk both from power and data connections.

The slots 62 in the magazine 14 are open to the side so that the hard disks 60 may be removed from the magazine 14 while the magazine 14 is in the open position while pulled out from the loading apparatus.

Although four disk drives 60 are shown in the illustrated embodiment, it is of course within the scope of the present invention that other numbers or arrangements of hard disks may be provided in a hard disk magazine.

The hard disk drives 60 are shown without the magazine 14 in Figure 6. The hard disk drives 60 contain hard disk platters and read/write heads, as is known. The hard disk drives 60 are each connected to ribbon cables 64 that run from the hard disk drives 60 to an internal hard disk connection board 66. The hard disk connection board 66 has connectors for each of the ribbon cables 64 and electrical connections for splitting the data, control and power lines between the disk drives. The hard disk connection board 66 in turn is connected to the docking connector 58. Control, data transfer and power is thereby transferred through the docking connector 58, hard disk connection board 66, and the ribbon cables 64 to the hard disk drives 60.

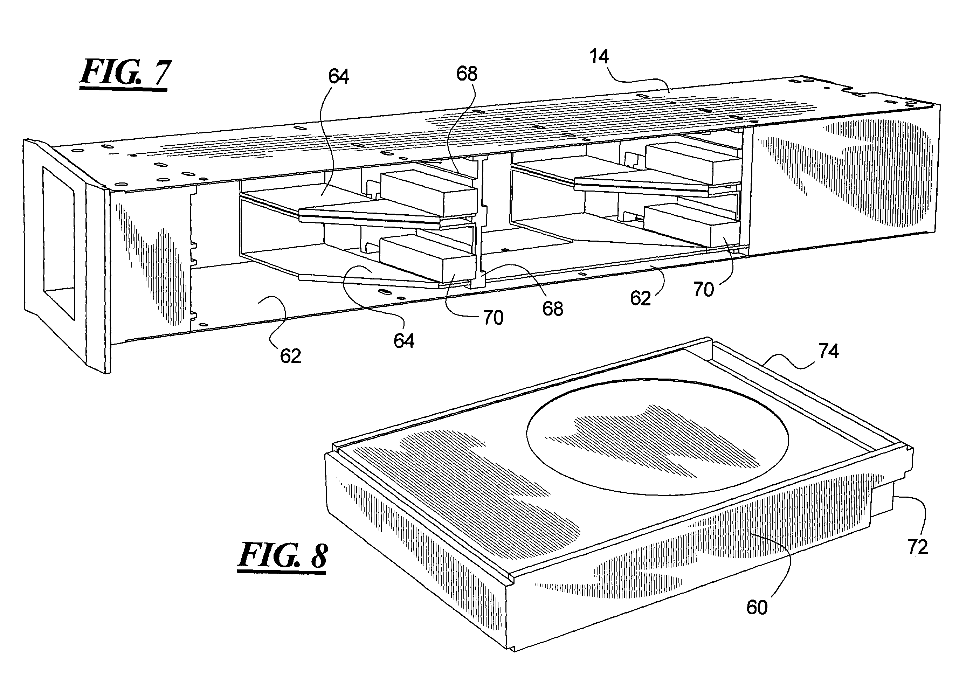

The hard disk magazine 14 is shown in **Figure 7** without the hard disks 60. In particular, the slots 62 are provided in a two-by-two arrangement and are shaped to accept the hard disk drives. Each slot 62 has a mounting wall 68 on which is provided a connector 70 for the ribbon cable 64. The connectors 70 may be fixed to the wall 68 or may be movably mounted thereon. Alternately, the wall 68 with the connectors 70 may be movable relative to the magazine 14. This permits the hard disk drives to be connected and disconnected.

In an alternate embodiment, the connectors 70 are on the back inside walls of the slots 62 to that the hard disk drives are connected to the connectors by the insertion of the hard disk drives into the slots.

An individual hard disk drive 60 is shown in **Figure 8**. The hard disk drive has an arrangement of data connection pins or pin sockets on the end 72. The hard disk drive 60 may also have a separate power connector portion with power connection pins at 74.

The present invention provides an enhanced transfer rate, a minimized "back up window", a backup to be done on tape at a convenient time for user, and a hard disk configurable as "most recently used files", "cache memory".

Although other modifications and changes may be suggested by those skilled in the art, it is the intention of the inventors to embody within the patent warranted hereon all changes and modifications as reasonably and properly come within the scope of their contribution to the art.

The features disclosed in the foregoing description, in the claims and/or in the accompanying drawings may, both separately and in any combination thereof, be material for realising the invention in diverse forms thereof.

## Claims

1. A data storage device for connection to a computer or computer network, comprising:
a housing;
a tape drive mounted in said housing, said tape drive being operable to read data from and write data to a data cartridge;
a cartridge storage magazine in said housing, said cartridge storage magazine defining a plurality of storage slots adapted to hold a respective plurality of data cartridges;
a cartridge shuttle in said housing and operable to move a data cartridge from said cartridge storage magazine to said tape drive and vise visa; and
a hard drive magazine in said housing, said hard drive magazine defining a plurality of hard drive mounting locations.

2. A data storage device as claimed in claim 1, wherein said cartridge storage magazine is selectively removable from said housing, said housing defining a magazine accepting space in which said cartridge storage magazine is mounted.

3. A data storage device as claimed in claim 1, wherein said hard drive magazine is selectively removable from said housing, said housing defining a magazine accepting space in which said hard drive magazine is mounted.

4. A data storage device as claimed in claim 1, wherein said hard drive magazine includes data and power connections to said plurality of hard drives.

5. A data storage device as claimed in claim 4, further comprising: a hard drive controller circuit in said hard drive magazine.

6. A data storage device as claimed in claim 1, wherein said hard drive magazine and said cartridge storage magazine are of substantially a same size and shape.

7. A data storage device as claimed in claim 6, wherein said hard drive magazine and said cartridge storage magazine are interchangeable in position in said housing.

8. A data storage device as claimed in claim 1, further comprising:
a docking connection to said hard drive magazine in said housing.

9. A data storage device as claimed in claim 8, where said docking connection is configured for hot swapping of said hard drive magazine during operation of said data storage device.

10. A data storage device for connection to a computer or computer network, comprising:
a housing;
at least one tape drive mounted in said housing, said tape drive being operable to read data from and write data to a data cartridge;
at least cartridge storage magazine in said housing, said cartridge storage magazine defining a plurality of storage slots adapted to hold a respective plurality of data cartridges;
a cartridge shuttle in said housing and operable to move a data cartridge from said cartridge storage magazine to said tape drive and vise visa; and
at least one hard drive magazine in said housing, said hard drive magazine defining a plurality of hard drive mounting locations.

11. A data storage device for connection to a computer or computer network, comprising:
a housing;
at least one tape drive mounted in said housing, said tape drive being operable to read data from and write data to a data cartridge;
a cartridge shuttle in said housing and operable to move a data cartridge from said cartridge storage magazine to said tape drive and vise visa; and
at least one hard drive magazine in said housing, said hard drive magazine defining a plurality of hard drive mounting locations.
